# EUROPEAN PATENT APPLICATION

(11) **EP 0 573 703 A1**
(43) Date of publication of application: **15.12.1993**
(21) Application number: 92201687.8
(22) Date of filing: 10.06.1992
(51) Int. Cl.: D06F 58/28

(54) **Method for optimizing the drying of clothes placed in a clothes drying machine or the like, and the machine obtained**

(71) Applicant: WHIRLPOOL EUROPE B.V., NL-5507 SK Veldhoven (NL)
(72) Inventor: Turetta, Daniele, I-21025 Comerio (VA) (IT); Civanelli, Claudio, I-21025 Comerio (VA) (IT)
(74) Representative: Melio, Jan Dirk

(57) **Abstract**

In a clothes drying machine (1) or the like, a method for optimizing the drying of such clothes comprises measuring, during a predetermined initial time period (t₁) of the drying stage, at least the temperature of the air (F) to be heated for feeding into the tub (6A) and the temperature of the air (U) leaving this latter after its interaction with the wet clothes, comparing these temperatures on termination of said time period (t₁) and determining from this comparison the quantity of water present in the clothes and hence their weight then, on the basis of this and of the type of fabric, evaluating the energy to be used for completely drying the clothes and the time required to effect this drying.

The clothes drying machine (1) or the like comprises sensor means (30, 31) for measuring at least the temperature of the air (F) to be heated and the temperature of the air (U) leaving the tub (6A), and comparison and control means (27) for comparing the values measured by the sensor means (30, 31) and for determining, on the basis of this comparison, the energy to be used during the drying of the clothes and the time for effecting this operation.

## Description

This invention relates to a method and apparatus for optimizing the drying stage in a clothes drying machine, washing-drying machine or the like of the type comprising a drum contained rotatably within a tub, said drum rotating at at least one known number of revolutions per minute, said machine also comprising usual means for generating hot air circulation through the drum to dry the wet clothes contained therein and of which their constituent fabric is known, at least one tank or vessel for collecting the water removed from said clothes by said air and condensed at one or more of said means during said circulation, and a pump for removing said water from said vessel, advantageously cyclically.

In particular, the clothes dryer or the like is of the closed-circuit type, ie comprising a heat exchanger for recovering the water removed from the clothes during the drying process. This water condenses at said heat exchanger and is collected in said vessel.

However, the invention also relates to a clothes dryer of the open circuit type without a heat exchanger, the water extracted from the clothes being dispersed into the environment.

Various methods (and clothes drying machines) are known for controlling the progress of the wet clothes drying operation and for halting this operation when the clothes are dry.

Often however, these methods (and consequently the clothes drying machines) do not allow the wet clothes to be treated in an optimized manner. In this respect, the drying stage takes place without taking account of the load present in the drum, often resulting in an energy consumption during this operation which is much higher than that necessary to dry the load present in said drum.

In addition, the time for which drying proceeds often does not take account of the amount of clothes to be dried. In such a case it frequently happens that a reduced load is subjected to prolonged action by the hot air, which can damage those clothes which have already reached complete dryness.

In addition, this imperfect and often excessive use of the means which heat the air and circulate it through the clothes drying machine subjects them to increased stress, which with time can affect the mechanical strength of said means.

Thus summarising, known systems are unreliable, consume a large energy quantity and can damage the clothes contained in the drum.

An object of the present invention is to provide a method for optimizing the drying stage for clothes contained in the drum of a clothes drying machine or the like.

A particular object of the invention is to offer a method of the aforesaid type which is simple to effect, results in a large energy saving during drying, and enables the drying to proceed for a time optimized on the basis of the amount and type of clothes contained in the machine.

A further object is to provide a method of the stated type by which the integrity of the clothes is safeguarded, ie which cannot cause any damage to the clothes in the machine during its implementation.

A further object is to provide a clothes drying machine or the like for implementing said method which is of simple construction, reliable and simple to use.

A further object is to provide a machine of the stated type which can be obtained by simply modifying analogous machine of the state of the art.

These and further objects which will be apparent to the expert of the art are attained by a method of the stated type used in a clothes drying machine or the like of the aforesaid type, characterised, for the purpose of optimizing clothes drying, by measuring, during a predetermined initial time period of the drying stage, at least the temperature of the air to be heated for feeding into the tub and the temperature of the air leaving this latter after its interaction with the wet clothes, comparing these temperatures on termination of said time period to determine the quantity of water present in the clothes and hence their weight, and finally on the basis of this latter value evaluating the energy to be used for drying said clothes and/or the time required to effect this drying.

The aforesaid method is implemented by a clothes drying machine or the like of the stated type, characterised by comprising sensor means for measuring at least the temperature of the air to be heated and the temperature of the air leaving the tub after its interaction with the clothes contained in the drum and to generate signals based on this measurement, said signals being fed to comparison and control means connected to at least one of the means for circulating the air through the drum and/or for heating said air, said comparison and control means comparing the values measured by the sensor means and determining, on termination of a predetermined time period and on the basis of this comparison, the quantity of water present in the clothes and hence, knowing their constituent fabric, their weight, said weight determination resulting in the action of said comparison and control means on the means for circulating and/or heating the air in order to determine the energy to be used during the drying of the clothes and the time for effecting this operation.

The present invention will be more apparent from the accompanying drawing, which is provided by way of non-limiting example and in which:
Figure 1 is a schematic sectional side view of a clothes drying machine according to the invention;
Figure 2 is a simplified block diagram of a part of the machine 1; and
Figure 3 represents in time (t)/temperature (T) coordinates a graph showing the time variation of curves corresponding to the temperature at three different points of the drying circuit of the machine of Figure 1.

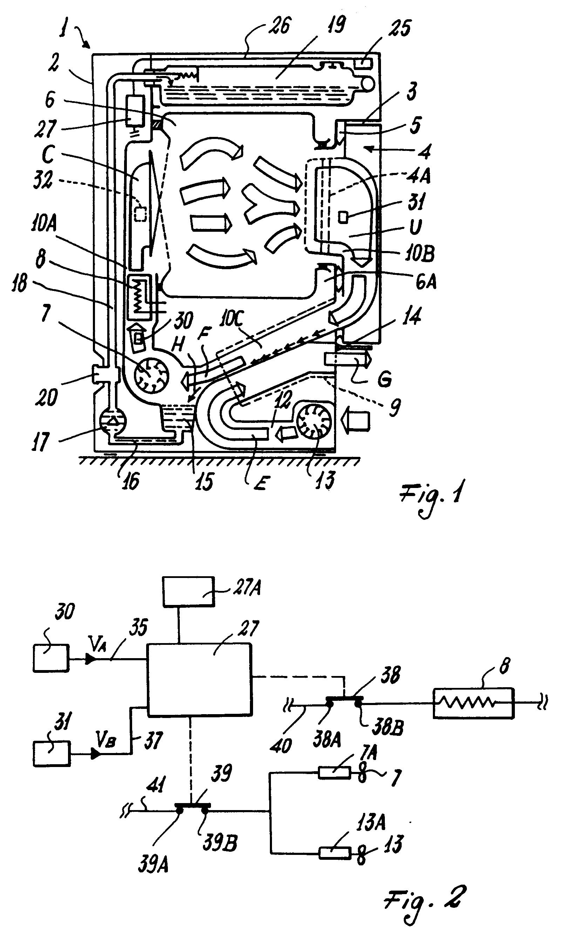

With reference to Figures 1 and 2, a clothes drying machine is indicated overall by 1 and comprises a cabinet 2 containing an aperture 3 at which there is positioned a door 4 provided with usual seal gaskets 5 and within which a filter element 4A is situated.

The aperture 3 provides access to a usual drum 6 (contained in a tub 6A) through which hot air is circulated to dry the clothes placed in it.

For this purpose, means are provided for generating this circulation and heating, said means consisting (in the example of Figure 1) of a fan 7, a resistance element 8, a heat exchanger 9 and relative ducts 10A for the introduction of dry hot air C into the drum 6, 10B for removing from this latter the moist hot air U leaving the drum 6 (and partly provided within the door 4) and 10C for feeding cooled air F to said fan 7. The air F originates from the heat exchanger 9 which in the example is of the counter-current type. Cold air from the outside is fed through it by a second fan 13 via a duct 12. The duct 12 then opens to the outside of the cabinet 2 via an aperture 14, from which heated air G emerges.

The water contained in the moist hot air U condenses on passage of this latter through the heat exchanger 9 and falls into a first collection vessel 15. This is connected by a pipe 16 to a pump 17 from which a further pipe 18 extends to terminate in a second collection vessel 19.

Alternatively the pipe 18 can be closed by a deflector or deviator (not shown) which connects the pump 17 to an aperture 20 opening into the cabinet 2 and which can be connected to a usual water discharge pipe.

The vessel 19 (or upper vessel) is advantageously removable to allow the demineralized water contained in it to be used for known purposes.

The machine 1 is a closed-circuit clothes dryer having for example four different drying levels selectable by the user via a usual control panel (not shown) connected to a known drying level selector 25.

According to the invention, the machine 1 comprises means for automatically determining the weight of the load present in the drum 6 (ie of the clothes, not shown) and optimizing the clothes drying process on the basis of this. Knowing the type of constituent fabric of the clothes and the r.p.m. at which the drum rotates during the spinning stage, the weight determination is made by measuring the water absorbed by the load during a previous wash or immersion in water.

Specifically, the drying selector 25 is connected via a connection 26 to a comparison and control unit 27 advantageously of the type comprising a microprocessor circuit (or another intelligent control unit). This latter is connected to means 30 which measure the temperature of the air to be heated, ie of the cooled air F, and to means 31 which measure the temperature of the moist hot air U. Sensor means 32 (shown by dashed lines in Figure 1) are also provided to measure the temperature of the air C entering the drum.

With reference to Figure 2, the unit 27 is connected via a line 35 to the sensor means 30, for example defined by a thermocouple or an equivalent temperature measurement means. Likewise, the unit 27 is connected to the sensor means 31 (for example defined by a thermocouple) via a line 37, said sensor means 31 being temperature transducers.

In addition the unit 27 controls, either directly or via the selector, two movable contactors 38 and 39 arranged to cooperate with corresponding fixed contacts 38A, 38B and 39A, 39B provided in power lines 40 and 41 to the resistance element 8 and to the motors 7A and 13A of the fans 7 and 13 respectively.

The use of the clothes dryer 1 is now described in relation to the implementation of the method of the invention.

It will firstly be assumed that the machine 1 is set for two spinning stages at different r.p.m. values, said stages being selectable by the user via the selector 25. It will also be assumed that the type of constituent fabric of the clothes to be dried is known.

After the machine has been started (or the drying stage selected if the machine 1 is a washer-dryer), the unit 27 closes the contactors 38 and 39 in the respective power lines to operate the resistance element 8 and the fans 7 and 13. This provides in known manner the air circulation through the machine 1 for drying the wet clothes, ie the load contained in the drum 6.

Then, during an initial predetermined time period t₁ of the drying stage of between five and ten minutes, for example ten minutes, the sensors 30 and 31 measure the temperature of the air F and air U and generate corresponding electrical signals V_{A} and V_{B} along the lines 35 and 37 to the unit 27.

If provided, the sensor means 32 measure the temperature of the hot air C entering the tub 6A and hence the drum 6. This temperature is always constant because it depends only on the resistance element 8. In contrast, the temperature measured by the sensor 31 can vary depending on the water contained in the clothes placed in the drum, or on the weight of the load.

In this respect, the greater the amount of clothes to be dried the larger the quantity of water they contain. As this depends on the type of constituent fabric of the clothes and as this type is known, by knowing the quantity of water which they contain it is possible to calculate their weight by suitable known comparison algorithms.

This obviously also depends on the r.p.m. of the spinning stage to which the clothes are subjected. However, this value is also known, either having been fixed by the manufacturer or being selectable by the user.

During the use of the machine, the sensors 30 and 31 and, if provided, the sensor means 32 (for example also defined by a usual thermocouple) feed their measurement data to the unit 27 during the time period t₁.

This latter in known manner constructs the curves X, Y of temperature of the air C against temperature of the air F, and curves Z relative to the temperature of the air U.

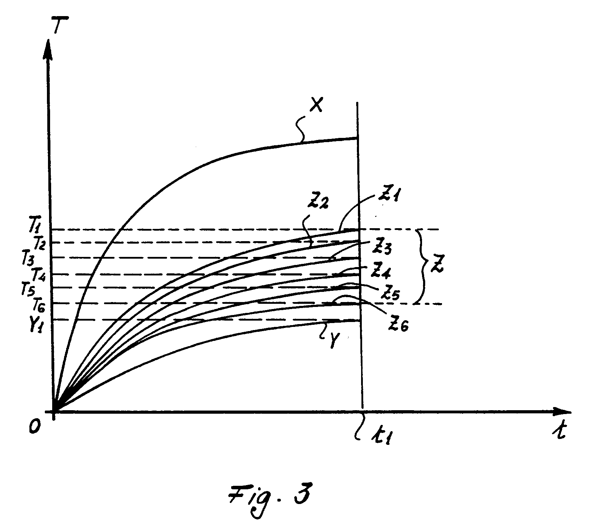

Figure 3 shows a plurality of curves (Z₁, Z₂, Z₃ ... Z₆) relative to different load weights but consisting of clothes of identical fabric, and at different load spinning speeds.

Specifically, the curves Z₁ and Z₂ relate to equal weight loads but spun at different speeds (eg. 900 and 1200 r.p.m.). In the same manner, each pair of curves Z₃, Z₄ and Z₅, Z₆ also relates to identical loads spun at different speeds.

As can be seen from Figure 3, the curves Z each attain a different temperature value T₁...T₆ after the time t₁. For equal speeds during the spinning stage, this depends on the different load weights and hence on the different water quantities contained in the load. Depending on this, the air C transfers different quantities of heat to the clothes in the drum to dry them.

The unit 27 now compares the temperature value (T₁...T₆) attained by the curve Z after the time t₁ with the value Y₁ attained by the curve Y after the same time period.

This comparison is made for example between the angles defined by the segments joining the point 0 on the t-T axes to the points on the curves Z and Y at time t₁.

More simply, the comparison can be made between the temperature Y₁ and the temperature reached by the curve Z at time t₁. On the basis of this, a suitable known algorithm for comparison between the calculated data and data stored in a suitable memory unit 27A of the unit 27 enables this latter, by also using data relative to the spinning r.p.m. and the type of constituent fabric of the clothes in the drum, to calculate the weight of the load.

On the basis of this result, the unit 27 acts on the selector 25 (or directly on the power lines 40 and 41 to the resistance element 8 and motors 7A, 13A of the fans 7 and 13) to optimize clothes drying, ie to select the correct energy to be used for clothes drying and/or the correct time period for obtaining complete drying of the load.

Summarizing, the method of the invention enables the weight of the clothes contained in the drum 6 to be calculated by determining the quantity of water present in the load, said determination being made by measuring the air temperature change within the drying circuit of the machine 1. On the basis of this weight, the machine 1 optimizes the complete drying of the clothes.

It should be noted that the method is independent of the temperature of the atmospheric air.

In this respect, if this temperature changes, the curve Y moves parallel to the T axis of Figure 3. At the same time the curve Z also moves through the same distance so that the ratio of the curve values remains constant for equal other conditions (clothes weight, spinning r.p.m. and type of fabric).

One particular embodiment of the invention has been described.

Other embodiments are however possible, such as applying the sensors to a circuit of the clothes dryer (or the like) in which the air to be heated and fed into the drum 6 is withdrawn directly from the external environment and the (moist) air leaving the drum is dispersed directly into said environment.

A method and machine as described and represented enable the drying of clothes contained in a clothes dryer (or the like) to be optimized on the basis of the weight of the load. This results in a considerable saving in the clothes drying operation costs and safeguards clothes integrity.

## Claims

1. A method for optimizing and controlling the drying stage in a clothes drying machine, washing-drying machine or the like of the type comprising a drum contained rotatably within a tub, said drum rotating at at least one known number of revolutions per minute, said machine also comprising usual means for generating hot air circulation through the drum to dry the wet clothes contained therein and of which their constituent fabric is known, characterised by measuring, during a predetermined initial time period (t₁) of the drying stage, at least the temperature of the air (F) to be heated for feeding into the tub (6A) and the temperature of the air (U) leaving this latter after its interaction with the wet clothes, comparing these temperatures on termination of said time period (t₁) to determine the quantity of water present in the clothes and hence their weight, and finally on the basis of this latter value evaluating the energy to be used for drying said clothes and/or the time required to effect this drying.

2. A method as claimed in claim 1, characterised in that the comparison between the temperature of the air (F) to be heated and the temperature of the air (U) leaving is defined by the ratio of the temperature of the air (F) to be heated to the temperature of the air (U) leaving the drum (6) or tub (6A) on termination of the predetermined time period (t₁).

3. A method as claimed in claim 1, characterised in that the temperature comparison is made between angles defined by segments which on a cartesian graph with time-temperature (t-T) axes join the origin (0) of these axes (t-T) to the point reached on the graph on termination of the predefined time period by curves (Z, Y) representing the variation in the temperature of the air (F) to be heated and the temperature of the air (U) leaving the drum (6) or tub (6A).

4. A method as claimed in claim 1, characterised in that the predetermined time period (t₁) within which the temperatures of the air (F) to be heated and the air (U) leaving are compared is preferably between five and ten minutes.

5. A clothes drying machine, washing-drying machine or the like comprising a drum, usual means for generating hot air circulation through the drum to dry the clothes contained therein, said air then being cooled, at least one tank or vessel for collecting the water removed from said clothes by said air and condensed at one of said means during said circulation, and a pump for removing said water from said vessel, advantageously cyclically, said machine implementing the method claimed in the preceding claims, said machine being characterised by comprising sensor means (30, 31) for measuring at least the temperature of the air (F) to be heated and the temperature of the air (U) leaving the tub (6A) after its interaction with the clothes contained in the drum (6) and to generate signals (V_{A}, V_{B}) based on this measurement, said signals (V_{A}, V_{B}) being fed to comparison and control means (27) connected to at least one of the means (8, 7, 13) for circulating the air through the drum (6) and/or for heating said air, said comparison and control means (27) comparing the values measured by the sensor means (30, 31) and determining, on termination of a predetermined time period (t₁) and on the basis of this comparison, the quantity of water present in the clothes and hence, knowing their constituent fabric, their weight, said weight determination causing said comparison and control means (27) to act on the means (7, 8, 13) for circulating and/or heating the air, to determine the energy to be used during the drying of the clothes and the time for effecting this operation.

6. A machine as claimed in claim 5, characterised by comprising further sensor means (32) for measuring the temperature of the dry hot air (C) within the tub (6A) and drum (6).

7. A machine as claimed in claims 5 and 6, characterised in that the sensor means (30, 31, 32) are temperature transducers.

8. A machine as claimed in claim 5, characterised in that the comparison and control means are a unit (27) advantageously of the type comprising a microprocessor circuit or another type of intelligent control.

9. A machine as claimed in claim 8, characterised in that the comparison and control unit (27) is connected to the drying stage selector (25).

10. A machine as claimed in claim 8, characterised in that the comparison and control unit (27) controls the movements of movable contactors (38, 39) which cooperate with respective fixed contacts (38A, 38B; 39A, 39B) in power lines (40, 41) to the means (7, 8, 13) for circulating and/or heating the air for drying the load contained in the drum (6).
